# EUROPEAN PATENT SPECIFICATION

(11) **EP 3 148 329 B1**
(45) Date of publication and mention of the grant of the patent: **02.05.2018**
(21) Application number: 15727437.4
(22) Date of filing: 27.05.2015
(51) Int. Cl.: A01M 29/08, C03C 17/36

(54) **A GLAZING**
VERGLASUNG
VITRAGE

(30) Priority: 28.05.2014 GB 201409408
(43) Date of publication of application: 05.04.2017
(73) Proprietor: Pilkington Group Limited, Nr. Ormskirk, Lancashire L40 5UF (GB)
(72) Inventor: THOMPSON, Nicola Ruth, Ormskirk, Lancashire L40 1SZ (GB); HURST, Simon James, Runcorn, Cheshire WA7 1QW (GB)
(74) Representative: Denno, Richard Christopher Somer
(86) International application number: PCT/GB2015/051540
(87) International publication number: WO 2015/181542

(56) References cited:
- US-A1- 2007 190 343
- US-A1- 2013 087 720

## Description

The invention relates to a bird protection glazing. In particular, the invention relates to a bird protection glazing for buildings.

Bird deaths due to window strikes represent one of the greatest threats to avian mortality next to habitat destruction. Due to the reflective and transparent characteristics of glass, the glass is not perceived as a barrier to the bird. The bird does not recognize that reflections of, for example, the sky, other buildings, vegetation and even open space, are false. As a result, the bird flies into the glass. Typically, the glass is a glazing in a building, for example, a window, but could equally be a glass balcony, a glazed door, etc.

Many millions of birds die each year from collisions with glass on buildings. While songbirds are most at risk from collisions with glass, nearly 300 species have been reported as collision victims, including hummingbirds, woodpeckers, kingfishers, waders and birds of prey. It is likely that these numbers will grow as advances in glass technology and production make it possible to construct buildings with all-glass curtain walls, in addition to the general increase in the amount of glass being used in architecture.

The reduction of bird strikes can be achieved in a number of ways. A common approach involves creating a visual signal that alerts the birds to the presence of the window for example, it has been shown that the use of ultraviolet (UV) patterns on glass may help birds to detect the presence of the glass. One such product is known under the registered trade mark Ornilux Mikado®. This glass has a UV patterned coating which is visible to birds but substantially invisible to the human eye.

US2013087720 (A1) relates to a pane element with a protective device against bird strikes, whereby a protective structure is arranged on the outer area of a pane element which structure absorbs light in the wavelength range of approximately 320 nm to 420 nm, in particular at approximately 350 nm to 380 nm and emits by Stokes shift on the longer wave range, in particular in the UV range or near UV range into the visible wavelength range and is visible as a hindrance for a bird that cannot be flown through and is largely not visible to the human eye or seems translucent or can be recognized as an anti-bird structure, and relates to a method for the production and the use for avoiding the injuring or killing of birds.

It is an object of the present invention to provide an improved glazing for minimising or preventing bird collisions with windows.

According to an aspect of the present invention there is provided a glazing for minimising or preventing bird collisions with windows or other glazings, the glazing comprising at least one substrate, and at least one antireflective coating, wherein said coating is deposited directly or indirectly on the substrate in a patterned arrangement comprising a plurality of separate elements.

Advantageously, provision of a plurality of antireflective elements on the glazing is more readily visible to a bird; the glazing appears to the bird as a pattern rather than simply a reflection of the surrounding area. For example, the reflection of the landscape appears to the bird as a broken up picture. Therefore, the risk of birds colliding with the glazing is minimised.

Preferably, the elements are equidistantly spaced apart.

Preferably, the patterned arrangement is a regular pattern, preferably having at least one line of symmetry. Preferably, the at least one line of symmetry is perpendicular to the longitudinal axis of the glazing.

Preferably, the elements comprise a plurality of stripes which are preferably located parallel to the longitudinal axis of the glazing. Preferably, the or each stripe is at least 1cm in width. Preferably, each stripe is between 2cm and 10cm in width.

The elements may comprise a plurality of dots. Preferably, the or each dot has a radius of substantially greater than 1mm. Preferably, the distance between the midpoint of neighbouring dots is substantially less than 15cm, preferably less than 10cm.

Preferably, the coating is deposited directly on to the substrate.

Preferably, the coating forms at least a part of an exposed surface of the glazing.

Preferably, at least one additional coating is provided on the glazing. Preferably, the at least one additional coating is provided adjacent the or each antireflective coating, in a side by side arrangement, preferably as a plurality of stripes or dots. Preferably the stripes are substantially less than 10cm in width, preferably substantially being 2.5cm in width.

The at least one additional coating is preferably a UV reflectance coating. Preferably, the UV reflectance coating comprises titanium dioxide, preferably having a geometric thickness of between substantially 10-100nm, preferably between 10-50nm, most preferably substantially 35nm thickness.

Provision of UV elements, for example, stripes or dots alongside antireflective stripes or dots, provides a strong highly visible contrasting pattern visible to birds. The antireflective coating in combination with the patterned UV reflectance coating enhances bird visible UV reflected light in one area of the pattern while minimising broadband reflection (including bird-visible UV) in other areas to maximise the apparent contrast in bird vision. The effect of this is to produce a pattern that is highly visible to birds so allowing birds to avoid fatal collisions with buildings glazed with these coatings.

The reflectance of glass can be reduced by the application of appropriate thin film interference coatings - "Anti-Reflection coatings". For a broad spectral response said coatings generally fall into 3 categories as follows:
1) Single layer coatings of porous low index materials such as porous silica - which give an intermediate effective refractive index between glass and air, so reducing the reflectance at the interfaces;
2) Three layer medium/high/low refractive index combinations. An example of such a combination is Glass/46nm ZnSnOₓ/93nm TiO₂/75nm SiO₂;
3) Four layer high/low/high/low refractive index combinations such as the "Optiview" coating (nominally Glass/12nm SnOₓ/25nm SiO₂/110nm SnOₓ/90nm SiO₂).

All of said categories are considered to be equally valid for the purposes of the present invention, as are other variations based on the same principles.

Preferably, the antireflective coating comprises a plurality of layers. Preferably, said layers comprise a first layer comprising tin oxide (SnO₂). Preferably, the first layer, most preferably SnO₂, has a geometric thickness of between substantially 5nm and 100nm, preferably between 10nm and 50nm, preferably between 10nm and 20nm, most preferably substantially 12nm.

Preferably, a second layer is provided preferably comprising silicon dioxide (SiO₂), preferably the SiO₂ has a geometric thickness of between substantially 5nm and 100nm, preferably between 10nm and 50nm, preferably between 15nm and 30nm, most preferably substantially 25nm. Most preferably, the second layer is deposited over the first layer.

Preferably, a third layer is provided preferably comprising fluorine doped tin oxide (F:SnO₂) preferably the F:SnO₂ had a geometric thickness of between substantially 5nm and 200nm, preferably between 50nm and 150nm, preferably between 100nm and 120nm, most preferably substantially 110nm. Most preferably, the third layer is deposited over the second layer.

Preferably, a fourth layer is provided preferably comprising SiO_{2.} Preferably, the SiO₂ has a geometric thickness of between substantially 5nm and 200nm, preferably between 50nm and 150nm, preferably between 80nm and 100nm, most preferably substantially 90nm. Most preferably, the fourth layer is deposited over the third layer.

Preferably, each coating layer is deposited by chemical vapour deposition (CVD) or magnetron sputtering. Preferably, the patterned arrangement is achieved by shadow masking, preferably blanking off sections of a gas inlet distribution slot, and potentially the reactor face. Alternative routes for sputtering may include applying a masking tape and peeling said tape off to give a pattern; preferably masking using an ink; or preferably etching the pattern into the coating.

Preferably, the at least one substrate is a ply of glass, preferably a float or rolled glass. Preferably, the or each substrate of glass is a pane of extra clear glass (glass having greater than 85 % visible light transmission (measured with Illuminant A) at thicknesses preferably from 2 to 20 mm, most preferably substantially 4mm geometric thickness. The substrate may be a low-iron float glass, for example, having an iron content of 0.015% w/w or lower. The or each substrate may be a ply of tinted glass having a visible light transmission of less than 85%.

The invention is not limited to the substrate being a glazing in a building. For example, the substrate may be a door, a balcony, a spandrel.

The substrate may be manufactured from polymeric material.

Preferably, the substrate comprises a surface #1 and a surface #2. Surface #1 is that surface of the substrate which faces the exterior of a building when mounted in use. Preferably, at least one antireflective coating is provided on surface #1 of the substrate. A UV reflectance coating may further be provided on surface #1.

The antireflective coating may be provided on surface #2 of the substrate.

The glazing may comprise a further coating, preferably a solar control coating, preferably a low-E coating.

In a further aspect the invention provides an insulated glazing unit for minimising or preventing bird collisions with windows or other glazings, comprising a first sheet of glazing material, a second sheet of glazing material, and at least one antireflective coating, characterised in that the at least one antireflective coating is deposited directly or indirectly on the first and/or second sheet in a patterned arrangement, the patterned arrangement comprising a plurality of separate elements.

Preferably, at least one UV reflectance coating is provided on the unit. Preferably, said UV coating is provided adjacent the or each antireflective coating.

It will be understood by the skilled reader that the first sheet of glazing material has a first surface (surface #1) and an opposing second surface (surface #2), and the second sheet of glazing material has a third surface (surface #3) and an opposing fourth surface (surface #4). In use in a building glazing, surface #1 faces the exterior of a building and surface #4 faces the interior of a building.

Preferably, an antireflective coating is provided on surface #1. The or a further antireflective coating may be provided on surface #2 and/or surface #3 and/or surface #4.

Preferably, at least one solar control coating, or low E coating is provided on surface #2 and/or surface #3 and/or surface #4.

In a further aspect, the invention provides a use of a glazing or glazing unit as hereinbefore described, as an anti-collision bird safe glazing.

All of the features described herein may be combined with any one of the above aspects, in any combination.
An embodiment of the invention will now be described, by way of example only, with reference to the accompanying drawings, wherein:
Figure 1 shows a schematic side view of a glazing according to the invention;
Figure 2 shows a schematic plan view of a glazing according to the invention;
Figure 3 shows a schematic plan view of an embodiment of a glazing according to the invention;
Figure 4 shows a schematic side view of a further alternative embodiment of the invention;
Figure 5 shows a schematic side view of an insulated glazing unit according to the invention; and
Figure 6 shows a schematic side view of an alternative embodiment of an insulated glazing unit according to the invention.

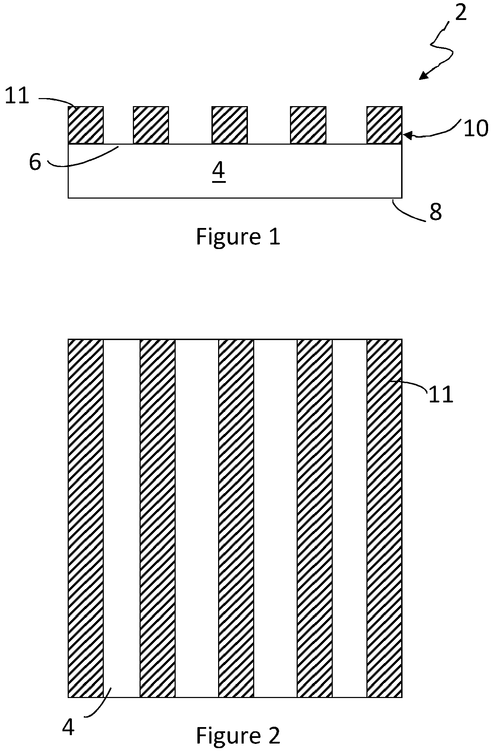

Figure 1 shows a glazing 2 according to the invention. The glazing 2 is a monolithic glazing comprising a substrate 4 having a first surface 6 (surface #1) and a second surface 8 (surface #2). The first surface 6 is that surface of the glazing which faces the exterior of a building when in use.
An antireflective coating 10 is provided in a patterned arrangement of separate elements 11 on the glazing 2. Said coating 10 is deposited using chemical vapour deposition in the float bath region of a float furnace, a process as described in WO97/42357A1. A shadow masking technique is used to achieve the required patterned arrangement whereby sections of the coater gas inlet distribution slot are blanked off to achieve a patterning.

Figure 2 shows the elements in a striped arrangement. In this arrangement, it is preferred that each stripe 11 is substantially 7.5cm in width, in a repeating pattern, having a line of symmetry perpendicular to the longitudinal axis of the glazing 2.

The antireflective coating 10 consists of a plurality of layers comprising: a first layer of SnO₂ having a geometric thickness of approximately 12nm; a second layer of SiO₂ having a geometric thickness of approximately 25nm deposited over the first layer; a third layer of SnO₂: F having a geometric thickness of approximately 110nm deposited over the second layer; and a fourth layer of SiO₂ having a geometric thickness of approximately 90nm deposited over the third layer.

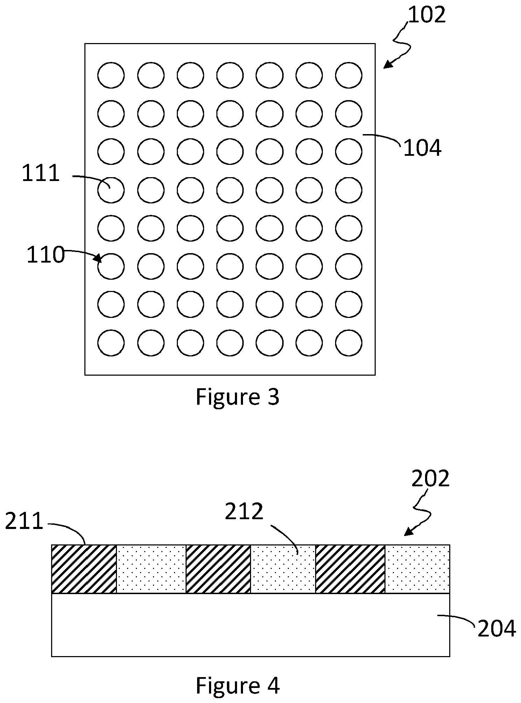

Figure 3 shows an alternative embodiment of a glazing 102 having a patterned arrangement of antireflective coating elements 111. In this arrangement, the coating 110 comprises a plurality of equidistantly spaced dots 111. The radius of preferably each dot is substantially greater than 1mm. The distance between the mid-point of neighbouring dots 111 is preferably substantially less than 15cm, preferably less than 10cm.

Figure 4 shows a further embodiment of a glazing 202. The glazing 202 comprises a plurality of antireflective coating elements 211 having adjacent UV reflectance coating stripes 212. Both coatings are shown deposited on surface #1 of a substrate 204. In this arrangement, a bird would see a highly visibly contrasting pattern and so would be deterred from flying into the glazing. It will be appreciated that the stripes 211 may be replaced with dots or a similar patterning configuration. The UV reflectance coating 212 comprises titanium oxide having a geometric thickness of approximately 31nm. Deposition of the titanium oxide is by sputter coating using conditions in Table 1 below. Shadow masks made from thin glass cut to 75mm width and attached with vacuum compatible adhesive tape are laid on the glass, preferably covering the antireflective patterning. The titania is then deposited on the glazing using pure Ti metal targets in plasma emission monitor-controlled oxygen reactive sputtering.

**Table 1 - TiO₂ deposition parameters**

| **Layer** | **Material** | **Process Parameters** |
|---|---|---|
| 1 | Ti | 35 kW 100kHz MF, Speed 466 mm/min (5 passes), Ar 250 sccm, 13% PEM setpoint for Ti emission, controlling O2 flow (giving 62-73 sccm) |

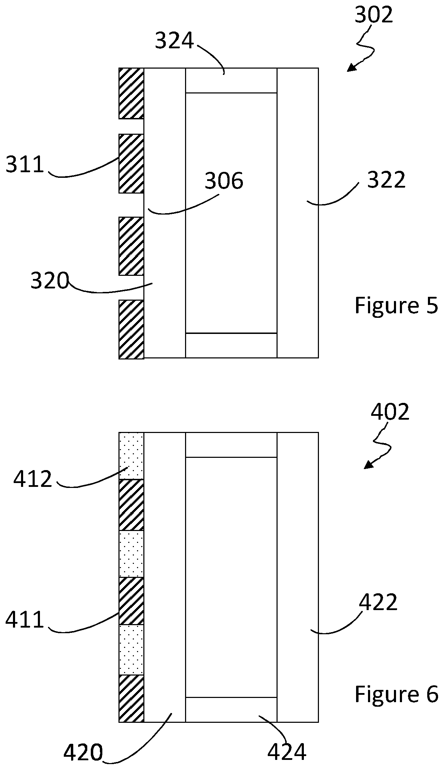

The invention is not limited to a monolithic glazing as shown in Figures 5 and 6. Figure 5 shows an insulated glazed unit 302 having a first ply 320, a second ply 322 and a spacer 324 therebetween. An antireflective patterned coating comprising a number of elements 311 is provided on surface #1 (306) of the glazing unit 302.

Figure 6 shows an alternative embodiment of an insulated glazing unit 402. The unit 402 has an antireflective patterned coating comprising elements 411 provided on surface #1. A UV reflectance coating 412 is provided adjacent each element 411 as shown in the figure. The coating 411, 412 may be provided on any of the surfaces of the unit 402.
Advantageously, an antireflective coating deposited in a patterned arrangement on a substrate, provides a contrasting pattern which a bird can recognise. When a UV reflectance coating is placed next to the antireflective coating, a highly contrasting patterning is achieved which acts as a further deterrent and helps birds to avoid flying into the window.

The invention is not restricted to the details of the foregoing embodiment(s). The invention extends to any novel one, or any novel combination, of the features disclosed in this specification (including any accompanying claims, abstract and drawings), that fall within the scope of the claims.

## Claims

1. A glazing (2, 102, 202) for minimising or preventing bird collisions with windows or other glazings, the glazing (2, 102, 202) comprising at least one substrate (4, 104, 204), and at least one antireflective coating (10, 110), **characterised in that** said coating (10, 110) is deposited directly or indirectly on the substrate in a patterned arrangement comprising a plurality of separate elements (11, 111, 211).

2. A glazing (2, 102, 202) as claimed in claim 1, wherein the patterned arrangement is a regular pattern.

3. A glazing (2, 102, 202) as claimed in claim 1 or 2, wherein the patterned arrangement has at least one line of symmetry.

4. A glazing (2, 102, 202) as claimed in any one of the preceding claims, wherein the elements (11, 111, 211) comprise a plurality of stripes which are preferably located parallel to the longitudinal axis of the glazing (2, 102, 202), optionally wherein the or each stripe is at least 1cm in width.

5. A glazing (2, 102, 202) as claimed in any one of claims 1 to 3, wherein the elements (11, 111, 211) comprise a plurality of dots, optionally wherein the distance between the mid-point of neighbouring dots is substantially less than 15cm.

6. A glazing (2, 102, 202) as claimed in any one of the preceding claims, wherein the coating (10, 110) is deposited directly on to the substrate (4, 104, 204).

7. A glazing (2, 102, 202) as claimed in any one of the preceding claims, wherein the coating (10, 110) forms at least a part of an exposed surface of the glazing.

8. A glazing (202) as claimed in any one of the preceding claims, wherein at least one additional coating is provided on the glazing.

9. A glazing (202) as claimed in claim 8, wherein the at least one additional coating (212) is provided adjacent the or each antireflective coating (211), in a side by side arrangement, preferably substantially less than 10cm in width.

10. A glazing (202) as claimed in claims 8 or 9, wherein the at least one additional coating (212) is a UV reflectance coating, optionally wherein the UV reflectance coating comprises titanium dioxide, preferably having a geometric thickness of between substantially 10-100nm.

11. A glazing (2, 102, 202) as claimed in any one of the preceding claims, wherein the antireflective coating (10, 110) comprises a plurality of layers, having a first layer comprising tin oxide (SnO₂); a second layer comprising silicon dioxide (SiO₂); a third layer comprising fluorine doped tin oxide (SnO₂:F); and a fourth layer comprising SiO_{2.}

12. A glazing (2, 102, 202) as claimed in any one of the preceding claims, wherein the substrate comprises a surface #1 and a surface #2, and at least one antireflective coating (10, 110) is provided on surface #1.

13. An insulated glazing unit (302, 402) for minimising or preventing bird collisions with windows or other glazings, comprising a first sheet of glazing material (320, 420), a second sheet of glazing material (322, 422), and at least one antireflective coating, **characterised in that** the at least one antireflective coating is deposited directly or indirectly on the first and/or second sheet in a patterned arrangement, the patterned arrangement comprising a plurality of separate elements (311, 411).

14. A glazing (2, 102, 202) or glazing unit (302, 402) as claimed in any one of the preceding claims, wherein the at least one substrate (4, 104, 204) is a ply of float or rolled glass.

15. Use of a glazing (2, 102, 202) or glazing unit (302, 402) as claimed in any one of the preceding claims as an anti-collision bird safe glazing.

## Patentansprüche

1. Verglasung (2, 102, 202) zum Verringern oder Verhindern der Kollision von Vögeln mit Fenstern oder anderen Verglasungen, wobei die Verglasung (2, 102, 202) mindestens einen Träger (4, 104, 204) und mindestens eine Antireflexionsbeschichtung (10, 110) umfasst, **dadurch gekennzeichnet, dass** die Beschichtung (10, 110) direkt oder indirekt auf dem Träger in einer gemusterten Anordnung abgeschieden ist, die eine Vielzahl getrennter Elemente (11, 111, 211) umfasst.

2. Verglasung (2, 102, 202), die wie in Anspruch 1 beansprucht ist, wobei die gemusterte Anordnung ein regelmäßiges Muster ist.

3. Verglasung (2, 102, 202), die wie in Anspruch 1 oder 2 beansprucht ist, wobei die gemusterte Anordnung mindestens eine Symmetrielinie aufweist.

4. Verglasung (2, 102, 202), die wie in einem der vorhergehenden Ansprüche beansprucht ist, wobei die Elemente (11, 111, 211) eine Vielzahl von Streifen umfassen, die vorzugsweise parallel zu der Längsachse der Verglasung (2, 102, 202), angeordnet sind, wobei optional der Streifen oder jeder Streifen mindestens eine Breite von 1 cm aufweist.

5. Verglasung (2, 102, 202), die wie in einem der Ansprüche 1 bis 3 beansprucht ist, wobei die Elemente (11, 111, 211) eine Vielzahl von Punkten umfassen, wobei optional der Abstand zwischen dem Mittelpunkt benachbarter Punkte im Wesentlichen weniger als 15 cm beträgt.

6. Verglasung (2, 102, 202), die wie in einem der vorhergehenden Ansprüche beansprucht ist, wobei die Beschichtung (10, 110) direkt auf dem Träger (4, 104, 204) abgeschieden ist.

7. Verglasung (2, 102, 202), die wie in einem der vorhergehenden Ansprüche beansprucht ist, wobei die Beschichtung (10, 110) mindestens einen Teil einer freiliegenden Oberfläche der Verglasung bildet.

8. Verglasung (202), die wie in einem der vorhergehenden Ansprüche beansprucht ist, wobei mindestens eine zusätzliche Beschichtung auf der Verglasung vorgesehen ist.

9. Verglasung (202), die wie in Anspruch 8 beansprucht ist, wobei die mindestens eine zusätzliche Beschichtung (212) benachbart zu der oder jeder Antireflexionsbeschichtung (211) vorgesehen ist, in einer Nebeneinander-Anordnung, vorzugsweise im Wesentlichen mit einer Breite von weniger als 10 cm.

10. Verglasung (202), die wie in Anspruch 8 oder 9 beansprucht ist, wobei die mindestens eine zusätzliche Beschichtung (212) eine UV-reflektierende Beschichtung ist, wobei optional die UV-reflektierende Beschichtung Titandioxid umfasst, vorzugsweise eine geometrische Dicke im Wesentlichen im Bereich von 10-100 mm aufweisend.

11. Verglasung (2, 102, 202), die wie in einem der vorhergehenden Ansprüche beansprucht ist, wobei die Antireflexionsbeschichtung (10, 110) eine Vielzahl von Schichten umfasst, aufweisend eine erste Schicht, die Zinnoxid (SnO₂) umfasst; eine zweite Schicht, die Siliciumdioxid (SiO₂) umfasst; eine dritte Schicht, die fluordotiertes Zinnoxid (SnO₂:F) umfasst; und eine vierte Schicht, die SiO₂ umfasst.

12. Verglasung (2, 102, 202), die wie in einem der vorhergehenden Ansprüche beansprucht ist, wobei der Träger eine Oberfläche # 1 und eine Oberfläche #2 umfasst und mindestens eine Antireflexionsbeschichtung (10, 110) auf der Oberfläche #1 vorgesehen ist.

13. Isolierverglasungseinheit (302, 402) zum Verringern oder Verhindern der Kollision von Vögeln mit Fenstern oder anderen Verglasungen, die einen ersten Bogen aus Verglasungsmaterial (320, 420), einen zweiten Bogen aus Verglasungsmaterial (322, 422) und mindestens eine Antireflexionsbeschichtung umfasst, **dadurch gekennzeichnet, dass** die mindestens eine Antireflexionsbeschichtung direkt oder indirekt auf dem ersten Bogen und/oder dem zweiten Bogen in einer gemusterten Anordnung abgeschieden ist, wobei die gemusterte Anordnung eine Vielzahl getrennter Elemente (311, 411) umfasst.

14. Verglasung (2, 102, 202) oder Verglasungseinheit (302, 402), die wie in einem der vorhergehenden Ansprüche beansprucht ist, wobei der mindestens eine Träger (4, 104, 204) eine Lage aus Floatglas oder Walzglas ist.

15. Verwendung einer Verglasung (2, 102, 202) oder Verglasungseinheit (302, 402), die wie in einem der vorhergehenden Ansprüche beansprucht ist, als eine Antikollisionsvogelschutzverglasung.

## Revendications

1. Vitrage (2, 102, 202) pour réduire au minimum ou empêcher des collisions d'oiseaux avec des fenêtres ou d'autres vitrages, le vitrage (2, 102, 202) comprenant au moins un substrat (4, 104, 204), et au moins un revêtement anti-réfléchissant (10, 110), **caractérisé en ce que** ledit revêtement (10, 110) est déposé directement ou indirectement sur le substrat dans un agencement à motifs comprenant une pluralité d'éléments séparés (11, 111, 211).

2. Vitrage (2, 102, 202) selon la revendication 1, dans lequel l'agencement à motifs est un motif régulier.

3. Vitrage (2, 102, 202) selon la revendication 1 ou 2, dans lequel l'agencement à motifs a au moins une ligne de symétrie.

4. Vitrage (2, 102, 202) selon l'une quelconque des revendications précédentes, dans lequel les éléments (11, 111, 211) comprennent une pluralité de bandes qui sont situées de préférence parallèlement à l'axe longitudinal du vitrage (2, 102, 202), en option dans lequel la ou chaque bande a au moins 1 cm de large.

5. Vitrage (2, 102, 202) selon l'une quelconque des revendications 1 à 3, dans lequel les éléments (11, 111, 211) comprennent une pluralité de points, en option dans lequel la distance entre le milieu de points adjacents est sensiblement inférieure à 15 cm.

6. Vitrage (2, 102, 202) selon l'une quelconque des revendications précédentes, dans lequel le revêtement (10, 110) est déposé directement sur le substrat (4, 104, 204).

7. Vitrage (2, 102, 202) selon l'une quelconque des revendications précédentes, dans lequel le revêtement (10, 110) forme au moins une partie d'une surface exposée du vitrage.

8. Vitrage (202) selon l'une quelconque des revendications précédentes, dans lequel au moins un revêtement supplémentaire est fourni sur le vitrage.

9. Vitrage (202) selon la revendication 8, dans lequel l'au moins un revêtement supplémentaire (212) est fourni de manière adjacente au ou à chaque revêtement anti-réfléchissant (211), dans un agencement côte-à-côte, de préférence sensiblement inférieur à 10 cm de large.

10. Vitrage (202) selon les revendications 8 ou 9, dans lequel l'au moins un revêtement supplémentaire (212) est un revêtement de réflectance des UV, en option dans lequel le revêtement de réflectance des UV comprend du dioxyde de titane, de préférence ayant une épaisseur géométrique entre sensiblement 10-100 nm.

11. Vitrage (2, 102, 202) selon l'une quelconque des revendications précédentes, dans lequel le revêtement anti-réfléchissant (10, 110) comprend une pluralité de couches, ayant une première couche comprenant de l'oxyde d'étain (Sn02) ; une deuxième couche comprenant du dioxyde de silicium (SiO₂) ; une troisième couche comprenant de l'oxyde d'étain dopé au fluor (SnO₂:F) ; et une quatrième couche comprenant SiO_{2.}

12. Vitrage (2, 102, 202) selon l'une quelconque des revendications précédentes, dans lequel le substrat comprend une surface #1 et une surface #2, et au moins un revêtement anti-réfléchissant (10, 110) est fourni sur la surface #1.

13. Unité de vitrage isolée (302, 402) pour réduire au minimum ou empêcher des collisions d'oiseaux avec des fenêtres ou d'autres vitrages, comprenant une première feuille de matériau de vitrage (320, 420), une deuxième feuille de matériau de vitrage (322, 422), et au moins un revêtement anti-réfléchissant, **caractérisée en ce que** l'au moins un revêtement anti-réfléchissant est déposé directement ou indirectement sur la première et/ou deuxième feuille dans un agencement à motifs, l'agencement à motifs comprenant une pluralité d'éléments séparés (311, 411).

14. Vitrage (2, 102, 202) ou unité de vitrage (302, 402) selon l'une quelconque des revendications précédentes, dans lequel l'au moins un substrat (4, 104, 204) est un pli de verre flotté ou laminé.

15. Utilisation d'un vitrage (2, 102, 202) ou unité de vitrage (302, 402) selon l'une quelconque des revendications précédentes en tant que vitrage anticollision de sécurité pour oiseaux.
